# DEMANDE DE BREVET EUROPEEN

(11) **EP 1 086 735 A1**
(43) Date de publication de la demande: **28.03.2001**
(21) Numéro de dépôt: 00490036.1
(22) Date de dépôt: 21.09.2000
(51) Int. Cl.: B01D 33/46, B01D 33/11, B01D 33/067, B01D 33/27, B01D 33/68, B01D 33/72

(54) **Filtre à tambour**

(30) Priorité: 23.09.1999 FR 9912096
(71) Demandeur: Vanlaer Filtration Industrielle, S.A., 59320 Haubourdin (FR)
(72) Inventeur: Rauwell, Jacques, 59130 Lambersart (FR)
(74) Mandataire: Ecrepont, Robert

(57) **Abrégé**

L'invention se rapporte à un filtre à tambour comprenant :
- une paroi (2) cylindrique de révolution d'axe (3) sensiblement horizontal, laquelle paroi (2) est, d'une part, guidée en rotation autour de l'axe (3) longitudinal du tambour et, d'autre part, pourvue de nombreux orifices de taille déterminée pour retenir la matière en suspension dans l'eau et évacuer l'eau au travers de la paroi du tambour et
- un dispositif (4) d'introduction d'eau chargée de matières en suspension introduisant celle-ci à l'une (5) des deux extrémités (5, 6) du tambour (1) et à l'intérieur de celui-ci, la matière progressant vers son autre extrémité (6),

Ce filtre à tambour est caractérisé en ce que la longueur de chaque onde de la lame est comprise entre cinquante millimètres et trois cents millimètres et l'amplitude de l'onde de la lame est comprise entre dix millimètres et soixante millimètres.

## Description

L'invention se rapporte à un filtre à tambour.

La filtration des eaux chargées en particules peut se faire à l'aide de nombreux procédés et/ou appareils.

A cet effet, on connaît les filtres dits à tambour qui ont pour objectif de séparer l'eau des matières solides.

Classiquement, un filtre à tambour comprend :
- une paroi cylindrique de révolution d'axe sensiblement horizontal, laquelle paroi est, d'une part, guidée en rotation autour de l'axe longitudinal du tambour et, d'autre part, pourvue de nombreux orifices de taille déterminée pour retenir la matière en suspension dans l'eau et évacuer l'eau au travers de la paroi du tambour et
- un dispositif de l'arrivée de l'eau chargée de matière en suspension dans le tambour filtrant.

Deux principes sont à ce jour utilisés pour cette alimentation.

Le premier consiste à filtrer l'eau chargée depuis l'extérieur vers l'intérieur du tambour par un système de raclage permettant d'évacuer la matière qui s'accumule sur la face externe du tambour.

Le second principe auquel l'invention se rapporte plus précisément consiste à introduire le mélange eau/matière à l'intérieur du tambour et notamment à l'une de ses extrémités de sorte que l'eau s'échappe vers l'extérieur du tambour tandis que la matière qui est progressivement séparée de son eau est récupérée à son autre extrémité.

La capacité de filtration est liée à différents paramètres et, notamment, à la longueur du tambour ainsi qu'au choix des orifices.

Plutôt que de réaliser des découpes dans un flan de matière ou d'utiliser un treillis mis en forme, la paroi du tambour est parfois constituée par une grille formée de cerceaux maintenus à l'écartement requis par des moyens appropriés, ces cerceaux ayant une section triangulaire, la pointe du triangle opposée à sa base étant orientée vers l'extérieur du tambour.

Il peut s'agir également de profilés axiaux maintenus par des supports circulaires.

Ces profilés sont de section triangulaire.

Cette disposition est avantageuse pour le rendement, cependant, après filtration la densité de la matière récupérée à l'extrémité du tambour reste assez faible et contient encore beaucoup d'eau de sorte que cette matière occupe encore un volume important qu'il faut stocker ou transporter en un autre lieu.

Cela a bien évidemment des répercussions sur le coût de l'opération.

On connaît un tambour (US-5.607.587) présentant sur sa face interne, localement, de courtes nervures à la manière d'un « S » allongé et faiblement incliné par rapport à l'axe longitudinal.

Ces nervures ont pour objectif de brasser la matière.

L'invention se propose de résoudre notamment le problème évoqué précédemment.

A cet effet, l'invention a pour objet un filtre à tambour du type précité comprenant :
- une paroi cylindrique de révolution d'axe sensiblement horizontal, laquelle paroi est, d'une part, guidée en rotation autour de l'axe longitudinal du tambour et, d'autre part, pourvue de nombreux orifices de taille déterminée pour retenir la matière en suspension dans l'eau et évacuer l'eau au travers de la paroi du tambour,
- un dispositif d'introduction de l'eau chargée de matières en suspension à l'une des deux extrémités du tambour et à l'intérieur de celui-ci, la matière progressant vers son autre extrémité,
- sur la face interne de la paroi cylindrique de révolution, au moins localement des lames ondulées qui s'étendent transversalement à la direction de déplacement de la matière,
ce filtre étant caractérisé en ce que la longueur de chaque onde de la lame est comprise entre cinquante millimètres et trois cents millimètres et l'amplitude de l'onde de la lame est comprise entre dix millimètres et soixante millimètres.

L'invention sera bien comprise à l'aide de la description ci après faite à titre d'exemple non limitatif en regard du dessin ci-annexé qui représente schématiquement :

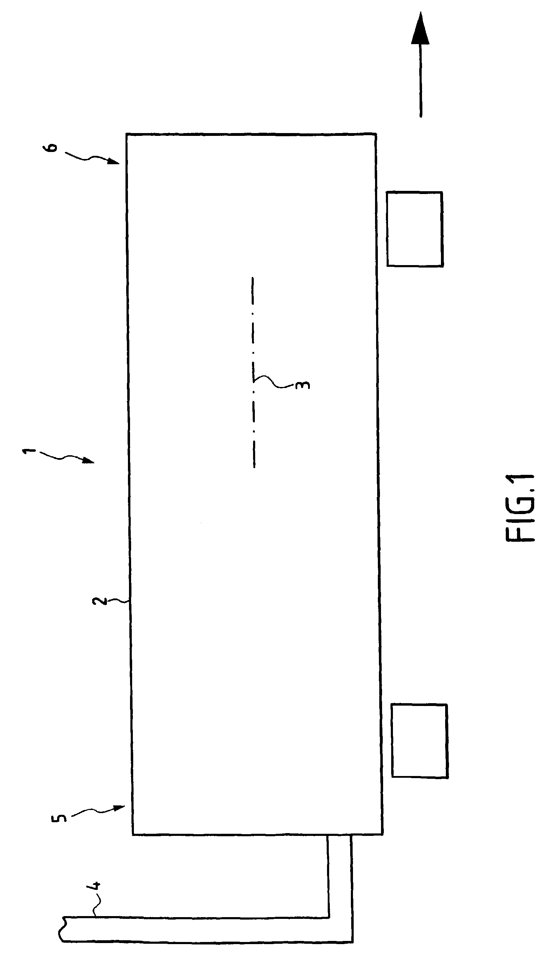

- figure 1 : une vue d'un filtre à tambour,

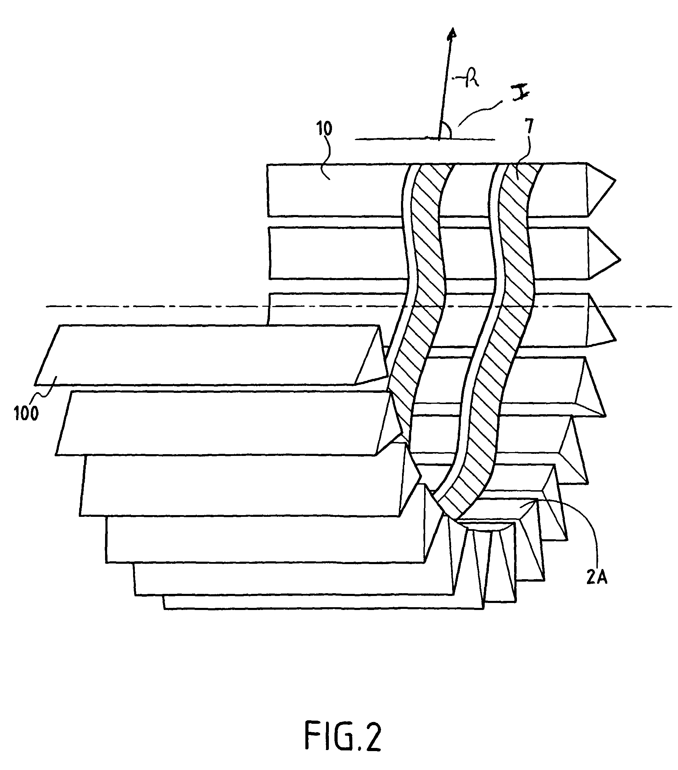

- figure 2 : une vue en perspective d'une extrémité d'un tambour,

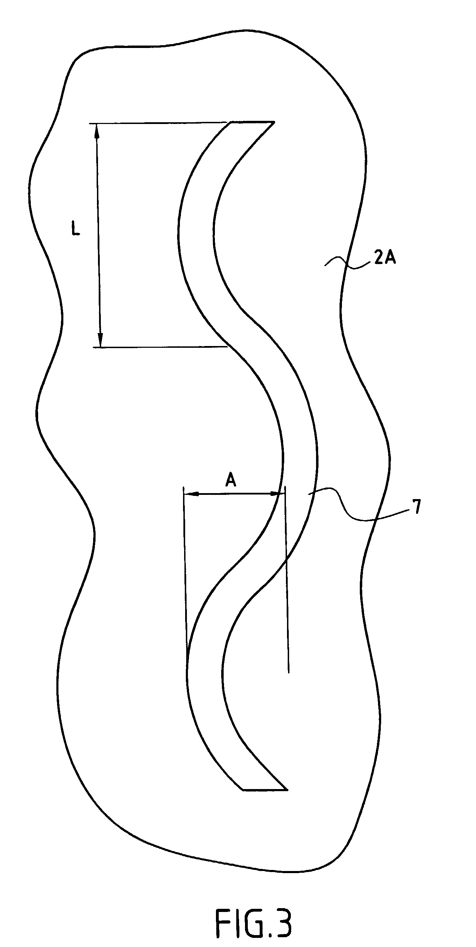

- figure 3 : une vue de la paroi interne du filtre à tambour.

En se reportant au dessin, on voit que, pour effectuer une séparation d'un mélange matière sèche/eau, on utilise un filtre 1 à tambour

Classiquement, ce filtre 1 à tambour comprend :
- une paroi 2 cylindrique de révolution d'axe 3 sensiblement horizontal, laquelle paroi 2 est, d'une part, guidée en rotation autour de l'axe 3 longitudinal du tambour et, d'autre part, pourvue de nombreux orifices de taille déterminée pour retenir la matière en suspension dans l'eau et évacuer l'eau au travers de la paroi du tambour et
- un dispositif 4 d'introduction d'eau chargée de matières en suspension introduisant celle-ci à l'une (5) des deux extrémités 5, 6 du tambour 1 et à l'intérieur de celui-ci, la matière progressant vers son autre extrémité 6.

La face interne 2A de la paroi cylindrique de révolution présente des moyens 7 pour, d'une part, presser progressivement la matière au long de son déplacement et, d'autre part, pour provoquer des turbulences dans la matière et ainsi en expulser l'eau.

Ainsi, en pressant progressivement la matière au long de son parcours et en la contraignant, on augmente la capacité de séparation de sorte que la matière parvenant en sortie du filtre à tambour est plus sèche et occupe un moindre volume.

Pour obtenir cet effet, les moyens 7 comprennent au moins localement des lames 7 ondulées qui s'étendent transversalement à la direction de déplacement de la matière.

L'orientation R de ces lames définit avec l'axe longitudinal du tambour un angle I supérieure à 45° voire proche des 80°.

La longueur L de chaque onde de la lame sera comprise entre cinquante millimètres et trois cents millimètres et l'amplitude A de celle-ci comprise entre dix millimètres et soixante millimètres.

La hauteur H de la lame sera comprise entre dix et cent cinquante millimètres mais plus généralement entre vingt millimètres et quarante millimètres.

Ainsi, dans un exemple particulier, pour un diamètre de tambour de neuf cent quatorze millimètres :
- la longueur L est égale à quatre vingt quinze millimètres et,
- l'amplitude A est égale à dix millimètres.

Pour un autre exemple, un diamètre de six cents millimètres :
- la longueur L est égale à soixante cinq millimètres, et
- l'amplitude A est égale à dix millimètres.

De préférence, il s'agit d'une seule lame enroulée hélicoïdalement à l'intérieur du filtre à tambour ou de lames comportant plusieurs ondes, c'est à dire s'étendant sur au moins un tour.

Le pas de l'hélice est de l'ordre de cinquante millimètres.

Ce pas peut être variable au long de l'axe longitudinal du tambour.

Lorsque l'eau est fortement chargée en matière en suspension, le pas de l'hélice est augmentée.

Il en est de même si le diamètre du tambour augmente.

La variation des paramètres précités, en fonction du diamètre du tambour, sera globalement la suivante.

Par exemple, pour un diamètre de tambour de mille deux cents millimètres, la longueur L est comprise entre cent vingt cinq millimètres et deux cents millimètres.

Pour un diamètre de deux mille millimètres, la longueur L est comprise entre deux cents millimètres et trois cents millimètres.

Il ne s'agit bien évidemment pas d'une règle qu'il faut appliquer strictement car le choix de la longueur L et de l'amplitude A ou de la hauteur dépend bien évidemment des caractéristiques du produit, de la viscosité, de l'humidité, du débit à l'entrée, etc ...

Quelques exemples en fonction des produits sont donnés ci-après :
a) boue floculée de station d'épuration :

| | |
|---|---|
| diamètre | 600 mm |
| longueur | 50 mm |
| amplitude | 10 mm |
| hauteur | 25 mm |
| | |
| diamètre | 900 mm |
| longueur | 50 mm |
| amplitude | 10 mm |
| hauteur | 25 mm |

b) rejet flux papeterie - ligne désencrage

| | |
|---|---|
| diamètre | 900 mm |
| longueur | 85 mm |
| amplitude | 20 mm |
| hauteur | 35 mm |

c) rejet tannerie

| | |
|---|---|
| diamètre | 900 mm |
| longueur | 300 mm |
| amplitude | 60 mm |
| hauteur | 75 mm |

d) rejet abattoir volaille

| | |
|---|---|
| diamètre | 600 mm |
| longueur | 200 mm |
| amplitude | 40 mm |
| hauteur | 100 mm |

La paroi du tambour est constituée par assemblage de profilés axiaux 100 pour former une grille.

Les supports circulaires aux viroles assurent le maintien des profilés axiaux.

Ces profilés axiaux ont une section triangulaire, la pointe du triangle opposée à sa base étant orientée vers l'extérieur du tambour.

Cela forme des dépouilles qui sont favorables à l'extraction de l'eau.

## Revendications

1. Filtre à tambour comprenant :
- une paroi (2) cylindrique de révolution d'axe (3) sensiblement horizontal, laquelle paroi (2) est, d'une part, guidée en rotation autour de l'axe (3) longitudinal du tambour et, d'autre part, pourvue de nombreux orifices de taille déterminée pour retenir la matière en suspension dans l'eau et évacuer l'eau au travers de la paroi du tambour,
- un dispositif (4) d'introduction d'eau chargée de matières en suspension introduisant celle-ci à l'une (5) des deux extrémités (5, 6) du tambour (1) et à l'intérieur de celui-ci, la matière progressant vers son autre extrémité (6),
- sur la face interne (2A) de la paroi cylindrique de révolution, au moins localement des lames (7) ondulées qui s'étendent transversalement à la direction de déplacement de la matière,
ce filtre étant **CARACTERISE** en ce que la longueur (L) de chaque onde de la lame est comprise entre cinquante millimètres et trois cents millimètres et l'amplitude (A) de l'onde de la lame est comprise entre dix millimètres et soixante millimètres.

2. Filtre selon la revendication 1 **caractérisé** en ce que la hauteur (H) de la lame est comprise entre dix millimètres et cent cinquante millimètres.

3. Filtre selon la revendication 1 **caractérisé** en ce qu'il comprend une seule lame ondulée enroulée hélicoïdalement à l'intérieur du filtre à tambour.

4. Filtre selon la revendication 3 **caractérisé** en ce que le pas de l'hélice est de l'ordre de cinquante millimètres.

5. Filtre selon la revendication 1 **caractérisé** en ce que :
- la paroi du tambour est constituée par assemblage de profilés axiaux (100) pour former une grille et,
- ces profilés axiaux ont une section triangulaire, la pointe du triangle opposée à sa base étant orientée vers l'extérieur du tambour.
